(19) Europäisches Patentamt
European Patent Office
Office européen des brevets

(11) EP 1 216 128 B1

(12) EUROPÄISCHE PATENTSCHRIFT

(45) Veröffentlichungstag und Bekanntmachung des Hinweises auf die Patenterteilung:
**07.04.2004 Patentblatt 2004/15**

(21) Anmeldenummer: **00956018.6**

(22) Anmeldetag: **11.09.2000**

(51) Int Cl.[7]: **B29C 33/64**, B29C 37/00, B32B 27/38, C09D 183/04

(86) Internationale Anmeldenummer:
**PCT/CH2000/000486**

(87) Internationale Veröffentlichungsnummer:
**WO 2001/023160 (05.04.2001 Gazette 2001/14)**

# (54) FORMTRENNMITTEL FÜR DUROPLASTISCHE FORMTEILE

MOLD RELEASE AGENT FOR DUROPLASTIC MOLDED PARTS

AGENT DE DEMOULAGE POUR PIECES MOULEES THERMODURCISSABLES

(84) Benannte Vertragsstaaten:
**AT BE CH CY DE DK ES FI FR GB GR IE IT LI LU MC NL PT SE**

(30) Priorität: **30.09.1999 DE 19946916**

(43) Veröffentlichungstag der Anmeldung:
**26.06.2002 Patentblatt 2002/26**

(73) Patentinhaber: **ABB RESEARCH LTD.**
**8050 Zürich (CH)**

(72) Erfinder: **KALTENBORN, Uwe**
**5405 Dättwil (CH)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(56) Entgegenhaltungen:
**EP-A- 0 136 358**
**EP-A- 0 305 838**
**EP-A- 0 306 302**
**EP-A- 0 325 210**
**EP-A- 0 668 137**
**EP-A- 1 008 429**
**US-A- 4 537 803**
**US-A- 5 401 580**
**US-A- 5 714 265**

- **DATABASE WPI Section Ch, Week 198748 Derwent Publications Ltd., London, GB; Class A26, AN 1987-337153 XP002155279 & JP 62 240363 A (SHINETSU CHEM IND CO LTD), 21. Oktober 1987 (1987-10-21)**
- **PATENT ABSTRACTS OF JAPAN vol. 1996, no. 04, 30. April 1996 (1996-04-30) & JP 07 316432 A (SHIN ETSU CHEM CO LTD), 5. Dezember 1995 (1995-12-05)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 216 128 B1

## Beschreibung

Die vorliegende Erfindung betrifft ein Formtrennmittel, welches insbesondere in der Verarbeitung von duroplastischen Formteilen verwendbar ist. Erfindungsgemäss bewirkt das Formtrennmittel die leichte Trennung des Formteils von der Giessform sowie die gleichzeitige chemische Anbindung kurzkettiger und/oder langkettiger Silikonverbindungen auf der Oberfläche des duroplastischen Formteils. Dadurch wird eine wirkungsvolle Hydrophobisierung der Formteiloberfläche erreicht.

### Technisches Gebiet

Duroplastische Werkstoffe, insbesondere Epoxidharze, werden als elektrische Isolierstoffe im Bereich der Mittelspannungs- und Hochspannungstechnik, beispielsweise für den Bau von Schaltanlagen, auf breiter Basis eingesetzt. Die heute bekannten Isolierstoffe weisen meist genügend gute elektrische Eigenschaften auf. Deshalb werden hinsichtlich der Einsatzfähigkeit von solchen isolierstoffen zusätzlich auch hohe Anforderungen an die mechanischen Eigenschaften gestellt, insbesondere an die mechanische Festigkeit, mechanische Flexibilität, an das Fremdschichtverhalten und an die Resistenz gegen die komplexen elektrischen und klimatischen Belastungen bei hoher Luftfeuchtigkeit. Im weiteren werden als bevorzugte Ausführungsform insbesondere Epoxidharze behandelt. Analoges gilt für andere duroplastische Werkstoffe.

Trotz der hervorragenden Eigenschaften der Epoxidharze als Isoliermaterial ist deren Einsatz im wesentlichen auf Anwendungen in Innenräumen beschränkt geblieben. Verbreitete Anwendungsgebiete von Epoxidharzen sind Isolationsmaterialien, beispielsweise in Messwandlern, Durchführungen, Leistungsschaltern, Trockentransformatoren und elektrischen Maschinen. In Freiluftanwendungen werden Isolationen aus Epoxidharzen nur selten eingesetzt. Die Ursachen hierfür sind in erster Linie in der mangelnden Beständigkeit gegen UV-Strahlung und dem Fremdschichtverhalten zu finden. Ein wesentlicher Aspekt dabei ist die geringe Widerstandsfähigkeit gegenüber komplexen elektrischen und klimatischen Beanspruchungen. Untersuchungen haben gezeigt, dass es auch bei Innenraumanlagen zum Versagen von Isolierteilen kommen kann. Befindet sich beispielsweise eine Ablagerung von Fremdschichten auf der Oberfläche des Formteils und kann eine Betauung nicht ausgeschlossen werden, so treten partiell Belastungen auf, die deutlich über denen von Freiluftanlagen liegen und somit verstärkt zum Versagen führen. Solche Bedingungen werden auch als erschwerte Tnnenraumbedingungen bezeichnet.

Kommt es unter den erwähnten Bedingungen zur Betauung der Oberflächen, so ist die isolierende Wirkung wesentlich von der wasserabweisenden Wirkung (Hydrophobie) der Oberfläche abhängig. Bei stark hydrophoben Oberflächen, wie sie bei einigen Silikonen auftreten, bilden sich Taubeläge in Form einzelner, voneinander getrennter Tröpfchen aus. Bei hydrophilen Oberflächen bildet sich jedoch in der Regel bei der Benetzung mit einer Flüssigkeit ein kohärenter Filmbelag, welcher zu einem Überschlag des Isolators führen kann. Deshalb ist eine hydrophobe Oberfläche von grossem Vorteil. Aufgrund des polaren Charakters der Epoxidharz-Matrix weisen Epoxidharz-Oberflächen, sowie eine grosse Anzahl weiterer duroplastischer Harzoberflächen, keine hydrophoben Eigenschaften auf.

### Stand der Technik

Zur Verbesserung der hydrophoben Oberflächeneigenschaften wurden bereits unterschiedliche Methoden vorgeschlagen. Im US 4,537,803 wird beispielsweise die Zugabe eines polymerisierbaren Silikonöls zum Epoxidharz-Gemisch beansprucht. US 5,306,747 betrifft die Zugabe eines modifizierten Silikonöls, welches mit dem Harzsystem chemisch reagieren kann. Weitere Vorschläge beinhalten ebenso die Zugabe von Verbindungen auf Silikonbasis zum Epoxidharzgemisch. Alle diese Methoden haben grundsätzlich den Nachteil, dass die zu polymerisierende, duroplastische Matrix durch die Zugabe der Silikonverbindung verändert wird. So können die physikalischen Eigenschaften, das Reaktionsverhalten, die Fliess- und Bearbeitungseigenschaften derart verändert werden, dass beispielsweise Entmischungserscheinungen oder elektrische Entladungen in Hohlräumen auftreten. EP-A-0 305 838 offenbart die Verwendung einer Zusammensetzung, enthaltend hydrolysiertes Glycidylpropyltriethoxysilan und ein Polydimethylsiloxan mit einem Zahlenmittel der Molmassen von mehr als 100'000, zur Herstellung eines chemisch inerten Formtrennmittels, welches eine Reihe von Vulkanisationszyklen übersteht, und nicht an der Oberfläche der Formgegenstände haften bleibt. Zu diesem Zweck wird die Zusammensetzung vorgängig in die Form eingebrannt.

### Darstellung der Erfindung

Es hat sich gezeigt, dass gemäss dem Verfahren der vorliegenden Erfindung alle die durch die Zugabe der Silikonverbindung zur Matrix genannten Nachteile behoben werden bzw. gar nicht entstehen, wenn es gelingt, nur die Oberfläche des Formteils in genügender Weise zu hydrophobieren. Es wurde nun überraschenderweise gefunden, dass es möglich ist, ohne einen zusätzlichen Verfahrensschritt, nur die Oberfläche der Form teile im Formgebungsverfahren zu hydrophobieren, wenn man als Formtrennmittel eine Mischung verwendet, welche (i) mindestens eine entformend wirkende Verbindung, vorzugsweise eine Silikonverbindung, sowie (ii) mindestens eine reaktive Silanverbindung, welche mit der im Formgebungsverfahren sich bildenden Epoxidharz-Oberfläche chemisch zu reagieren vermag, enthält. Das erfindungsgemässe Formtrennmittel kann (iii) gegebenenfalls weitere Zusatzstoffe bzw. Additive, wie beispielsweise wässerige und/oder nicht-wässerige Lösungsmittel, enthalten. Überraschend ist, dass der Komponente (i), d.i. der entformend wirkenden Silikonverbindung, die Komponente (ii), d.i. die reaktive Silanverbindung, zugesetzt werden kann, ohne dass diese die entformende Wirkung der Komponente (i) merklich behindert. Gleichzeitig vermag die reaktive Komponente (ii) während der Formgebung bzw. im Entformungsvorgang in situ mit der sich bildenden Oberfläche des Formteils zu reagieren. Dabei bildet sich eine stabile gleichmässige dünne hydrophobe silikonhaltige Schicht auf der Oberfläche des Formteils. Die Oberfläche des Formteils wird chemisch derart modifiziert, dass diese unter erschwerten Innenraumbedingungen eine deutlich höhere Hydrophobie und eine deutlich höhere Hydrophobiebeständigkeit aufweist, so dass solche oberflächen-modifizierten Formteile mit Vorteil als Isolierteile in der Mittel- und Hochspannungstechnik verwendet werden können. Erfindungsgemäss können dabei die an sich bekannten Formstoffsysteme und auch die Verfahrensweisen zu deren Herstellung unverändert beibehalten werden. Deren physikalische Eigenschaften und deren Verhalten im Formgebungsverfahren werden nicht verändert. In diesem Sinne wird das erfindungsgemässe Formtrennmittel aufgrund der sehr adhesiven Eigenschaften von Epoxidharzen dazu verwendet, solche Formteile ohne Verkleben in der Form fertigen zu können und gleichzeitig in demselben Verfahrensschritt in situ die Oberfläche des gebildeten Formteils wirkungsvoll zu hydrophobieren.

Die vorliegende Erfindung ist in den Patentansprüchen definiert. Insbesondere betrifft die vorliegende Erfindung ein Formtrennmittel für die Herstellung von duroplastischen Formteilen mit hydrophobierter Oberfläche, welches dadurch gekennzeichnet ist, dass dieses enthält:

(i) mindestens ein entformend wirkendes Polydimethylsiloxan der allgemeinen Formel (I),

$$(CH_3)_3Si\text{-}O\text{-}[Si(CH_3)_2\text{-}O]_m\text{-}Si(CH_3)_3 \qquad (I),$$

worin

m Null oder eine ganze Zahl von 1 bis 1000, bedeutet,

sowie
(ii) mindestens eine reaktive, gegebenenfalls hydrolysierbare, Silanverbindung, welche mit der im Formgebungsverfahren sich bildenden duroplastischen Oberfläche *in situ* chemisch zu reagieren vermag, der allgemeinen Formel (III):

$$(CH_3O)_{3-p}(CH_3)_pSi\text{-}[O\text{-}Si(CH_3)_2]_s\text{-}R \qquad (III),$$

worin

p Null, 1, 2 oder 3,
s Null oder eine ganze Zahl von 1 bis 100,
R einen zweiwertigen substituierten organischen Rest,

welcher eine reaktive Gruppe trägt, welche mit einem Epoxidharz chemisch zu reagieren vermag bedeuten und diese reaktive Gruppe Hydroxy, Amino, die Isocyanatgruppe, eine Estergruppe, oder Glycidyl, bedeutet, und der Anteil an reaktivem Silan der Komponente (ii) im Bereich zwischen 5 Gew.-Promille und 5 Gew.-%, bezogen auf das Gesamtgewicht des Formtrennmittels, liegt.

Das erfindungsgemässe Formtrennmittel kann (iii) gegebenenfalls weitere Zusatzstoffe, wie beispielsweise wässerige und/oder nicht-wässerige Lösungsmittel, enthalten.

Unter dem Begriff "nicht ausgehärtete oder nicht vollständig ausgehärtete duroplastische Oberfläche" ist die im Formgebungsverfahren *in situ* sich bildende Oberfläche zu verstehen. Ebenso fällt unter diesen Begriff beispielsweise die Oberfläche eines entformten nicht vollständig ausgehärteten Formkörpers, der einer Nachhärtung unterzogen wird. Das erfindungsgemässe Formtrennmittel kann in diesem Sinne als Entformungsmittel und Hydrophobierungsmittel im Formgebungsverfahren und/oder als Hydrophobierungsmittel im Nachhärtungsverfahren eingesetzt

werden, wobei die oben erwähnten vorteilhaften Eigenschaften erhalten werden.

Die vorliegende Erfindung betrifft auch die Verwendung des erfindungsgemässen Formtrennmittels im Formgebungsverfahren und/oder im Nachhärtungsverfahren für die Herstellung von duroplastischen Formteilen mit hydrophobierter Oberfläche.

Die Erfindung betrifft im weiteren ein Verfahren zur Herstellung von duroplastischen Formteilen mit hydrophobierter Oberfläche, welches dadurch gekennzeichnet ist, dass man im Formgebungsverfahren ein Formtrennmittel verwendet, welches (i) mindestens eine entformend wirkende Verbindung der vorgehend angegebenen allgemeinen Formel (I) sowie (ii) mindestens eine reaktive, gegebenenfalls hydrolysierbare, Silanverbindung der vorgehend angegebenen allgemeinen Formel (III) enthält, welche mit der im Formgebungsverfahren sich bildenden duroplastischen Oberfläche in situ chemisch zu reagieren vermag.

Die vorliegende Erfindung betrifft auch die erfindungsgemäss hergestellten duroplastischen Formteile.

Formtrennmittel für duroplastische Werkstoffe sowie deren Einsatz und Funktion in Formgebungsverfahren sind an sich bekannt. Als trennwirksame Komponenten werden sehr oft an sich bekannte Silikone bzw. Polymethylsiloxane, welche endständig Trimethylsilylgruppen enthalten und Gemische solcher Verbindungen, verwendet. Solche Silikone und deren Gemische können gegebenenfalls zusätzlich trennwirksame Verbindungen in Form von Silanen enthalten, wie solche im weiteren als Verbindungen der allgemeinen Formel (II) definiert sind. Der Anteil aller trennwirksamen Bestandteile kann in einem Bereich von 1 Gew.-% bis 98 Gew.-% bezogen auf das Gesamtgewicht des Trennmittels liegen. Als optimal haben sich bisher 11,5 Gew.-% bis 15 Gew.-% und 85 Gew.-% bis 98 Gew.-% bezogen auf das Gesamtgewicht des Trennmittels erwiesen. Der Rest des Trennmittels besteht aus der im weiteren definierten reaktiven Silanverbindung [Komponente (ii)] sowie aus wässerigen oder nicht-wässerigen Lösungsmitteln und gegebenenfalls weiteren Zusatzstoffen. Wesentlich für die entformende Wirkung des erfindungsgemässen Formtrennmittels ist der Anteil an Polydimethylsiloxanen der allgemeinen Formel (I),

$$(CH_3)_3Si\text{-}O\text{-}[Si(CH_3)_2\text{-}O]_m\text{-}Si(CH_3)_3 \qquad (I),$$

worin

m Null oder eine ganze Zahl von 1 bis 1000, vorzugsweise eine ganze Zahl von 10 bis 50, bedeutet.

Die Stockpunkte der Verbindungen der Formel (I) liegen vorzugsweise im Bereich von -50°C bis 0°C, deren Siedepunkte vorzugsweise über 80°C (>80°C) und deren Molekulargewicht vorzugsweise im Bereich von 162 bis 74000.

Als entformend wirkende Verbindungen können aber nicht nur Polydimethylsiloxane eingesetzt werden. So sind auch Siloxane bekannt, welche funktionelle Gruppen oder anstelle der Methylgruppen auch Äthylgruppen enthalten. Solche Verbindungen wirken ebenfalls entformend und können im Rahmen der vorliegenden Erfindung zusammen oder anstelle von Verbindungen der Formel (I) eingesetzt werden.

Gemische der Verbindungen der Formel (I) können gegebenenfalls wie erwähnt weitere trennwirksame Silane, vorzugsweise der allgemeinen Formel (II), als Beimengung, das heisst in Konzentrationen von 0.01 Gew.-% bis 50.0 Gew.-%, vorzugsweise von 1,5 Gew.-% bis 5.0 Gew.-%, bezogen auf das Gewicht der anwesenden Verbindungen der Formel (I), enthalten. Die genannten Silane entsprechen vorzugsweise der allgemeinen Formel (II):

$$(CH_3)_3Si\text{-}O\text{-}[Si(CH_3)_2\text{-}O]_m\text{-}[SiH(CH_3)\text{-}O]_n\text{-}Si(CH_3)_3 \qquad (II),$$

worin

m die oben angegebene Bedeutung hat und

n eine ganze Zahl von 1 bis 50 , vorzugsweise eine ganze Zahl von 1 bis 10 bedeutet, und die Dimethylsilyloxygruppen und die Methylhydrosilyloxygruppen im Molekül in beliebiger Reihenfolge angeordnet sind.

Wesentlicher Bestandteil zur Erfüllung der Aufgaben der Erfindung ist die reaktive Silanverbindung (im weiteren auch als "Primer" bezeichnet) der allgemeinen Formel (III):

$$(CH_3O)_{3\text{-}p}(CH_3)_pSi\text{-}[O\text{-}Si(CH_3)_2]_s\text{-}R \qquad (III),$$

worin

p Null, 1, 2 oder 3, vorzugsweise Null oder 1,
s Null oder eine ganze Zahl von 1 bis 100, vorzugsweise Null bis 10,
R einen zweiwertigen, gegebenenfalls durch Hydroxyl substituierten, organischen Rest, welcher eine oder mehrere reaktive Gruppen trägt, welche mit einem Epoxidharz chemisch zu reagieren vermögen, bedeuten.

In der Verbindung der Formel (III) kann die Methylsilylgruppe auch z. B. durch Ethylsilyl ersetzt sein. Ebenso kann Trimethoxysilyl durch Triethoxysilyl ersetzt sein. In diesem Sinne steht der Ausdruck Methyl jeweils unabhängig voneinander auch für Ethyl, Propyl oder Butyl.

Die genannten reaktiven Gruppen sind ausgewählt aus Glycidyl, Hydroxy, Amino ($-NH_2$) und/oder die Isocyanatgruppe ($-N=C=O$). Als reaktive Gruppe kommt auch eine Estergruppe, beispielsweise eine Acetylestergruppe infrage, welche nach intermediärer Hydrolyse eine Verbindung ergibt, die mit der Matrix chemisch reagieren kann.

R in der Verbindung der allgemeinen Formel (III) bedeutet vorzugsweise einen 3-Glycidoxypropylrest der Formel (IV):

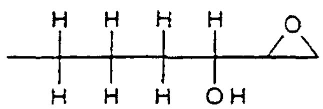

(IV)

wobei p vorzugsweise Null oder 1, vorzugsweise Null und s vorzugsweise Null bedeuten. Bevorzugt sind 3-Glycidoxypropyl-trimethoxysilan und 3-Glycidoxypropyl-(methyl)dimethoxysilan.

Bedeutet R einen Rest, welcher eine reaktive Gruppe trägt, so entspricht dieser Rest vorzugsweise der Formel (V):

-A-(reaktive Gruppe) (V),

worin

A einen zweiwertigen gesättigten oder ungesättigten alifatischen Rest, der ein oder mehrere Sauerstoffatome und/oder -NH-Gruppen enthalten kann, einen zweiwertigen cycloalifatischen Rest, einen zweiwertigen aromatischen Rest oder einen gesättigten oder ungesättigten alifatischen Rest, der ein oder mehrere Sauerstoffatome und/oder -NH-Gruppen enthalten kann und durch Phenylen substituiert ist, wobei jeweils an eine freie Valenz dieses zweiwertigen Restes eine reaktive Gruppe gebunden ist, bedeutet.

A als zweiwertiger gesättigter oder ungesättigter alifatischer Rest bedeutet vorzugsweise einen Rest der Formel $-(CH_2)_t-$ , worin t eine ganze Zahl von 1 bis 4, vorzugsweise 2, 3 oder 4, bedeutet.

A als zweiwertiger cycloalifatischer Rest bedeutet vorzugsweise Cyclohexylen; als zweiwertiger aromatischer Rest vorzugsweise Phenylen, vorzugsweise metha- oder para-Phenylen.

A als gesättigter oder ungesättigter alifatischer Rest, welcher durch Phenylen substituiert ist, wobei jeweils eine freie Valenz durch die reaktive Gruppe besetzt ist, bedeutet vorzugsweise $-(CH_2)_t-(C_6H_4)-$, wobei die reaktive Gruppe vorzugsweise an das Phenylen, vorzugsweise in metha- oder para-Stellung, gebunden ist.

Bevorzugte Verbindungen der Formel (III), welche einen Rest der Formel (V) aufweisen, sind beispielsweise m-Aminophenyltrimethoxysilane $[H_2N-(C_6H_4)-Si(OCH_3)_3]$, p-Aminophenyltrimethoxysilane $[H_2N-(C_6H_4)Si(OCH_3)_3]$, 3-(m-Aminophenoxy)propyltrimethoxysilane $[H_2N-(C_6H_4)-OCH_2CH_2CH_2Si(OCH_3)_3]$, {3-(2-A-minoethyl)aminopropyl} trimethoxysilane $[H_2NCH_2CH_2NH(CH_2)_3Si(OCH_3)_3]$.

Reaktive Verbindungen der Formel (III), welche Estergruppen enthalten, sind z.B.
Acetoxymethyltrimethoxysilan $[CH_3COOCH_2Si(OCH_3)_3]$ oder
Acetoxypropyltrimethoxysilan $[CH_3COO(CH_2)_3Si(OCH_3)_3]$.

Reaktive Verbindungen der Formel (III), welche eine Hydroxylgruppe aufweisen sind z.B. Hydroxymethyltriethoxysilan $[HO-CH_2-Si(C_2H_5)_3]$, oder Hydroxymethyltrimethylsilan $[HO-CH_2-Si(CH_3)_3]$.

Isocyanatopropyltriethoxysilan $[OCN-(CH_2)_3-Si(OC_2H_5)_3]$ ist ein Beispiel für eine Verbindung der Formel (III), welche eine Isocyanatgruppe enthält.

Die Verbindungen der Formel (III) sowie deren Herstellung sind an sich bekannt und sind ausführlich in der Literatur beschrieben worden.

Bevorzugt sind auch komplexere Verbindungen mit mehreren reaktiven Gruppen entsprechend dem Substituent R und mit zahlreicheren Methoxysilangruppen, wie beispielsweise Verbindungen der allgemeinen Formel (VI):

$$(CH_3O)_{3-p}(CH_3)_pSi\text{-}[O\text{-}Si(CH_3)_2]_s\text{-}[O\text{-}Si(CH_3)(R_1)]_r\text{-}O\text{-}Si(CH_3)_p(OCH_3)_{3-p} \quad (VI),$$

worin

- r eine ganze Zahl von 1 bis 5, vorzugsweise 1, 2 oder 3, bedeutet,
- $R_1$ unabhängig voneinander eine der oben angegebenen Bedeutungen von R, und
- s die oben angegebene Bedeutung haben, wobei die Reste $-O-Si(CH_3)_2-$ und $-O-Si(CH_3)(R_1)-$ im Molekül in beliebiger Reihenfolge angeordnet sind.

Für die Herstellung des erfindungsgemässen Formtrennmittels wird vorzugsweise vorerst die Komponente (i), d.i. die entformend wirkende Verbindung, in einem nicht-wässrigen Lösungsmittel gelöst oder auf wässriger Basis als Emulsion zubereitet. Die Verwendung von organischen Lösungsmitteln erfordert jedoch die Beherrschung aller relevanten Gefahren für die Gesundheit der Anwender und der Umwelt. Deshalb ist eine Emulsion in Wasser zu bevorzugen. Die wässrige Emulsion stellt man in an sich bekannter Weise unter Verwendung von Emulgatoren her. Bevorzugte Emulgatoren sind beispielsweise Organosilyl- oder Organosiloxanylcarbonsäuren, alkylsyloxysubstituierte Alkylpolyethylenetherverbindungen.

Hierauf setzt man der Lösung oder der wässrigen Emulsion die Komponente (ii), d.i. die reaktive Silanverbindung (III) und/oder (VI) zu, wobei man diese bei Verwendung von Wasser vorzugsweise ebenfalls emulgiert. Man kann aber die Komponenten in jeder beliebiger Reihenfolge separat oder zusammen im Lösungsmittel auflösen oder in Wasser emulgieren.

Das erfindungsgemässe Trennmittel besteht vorwiegend aus dem Gemisch der gelösten oder emulgierten trennwirksamen Komponente (i) und dem Primer, d.i. der reaktiven Komponente (ii). Dabei ist das Mischungsverhältnis zwischen der trennwirksamen Komponente (i) und der reaktiven Komponente (ii) von Bedeutung und kann je nach den verwendeten Verbindungen optimiert werden. Für ein System basierend auf Polydimethylsiloxan, worin n durchschnittlich 10-50 bedeutet, wird mit einem Primeranteil von 1 Gew.-% bezogen auf das Gesamtgewicht der Mischung ein sehr wirksames Formtrennmittel erhalten. Der Primeranteil kann bis auf 5 Promille bezogen auf das Gesamtgewicht der Mischung reduziert werden. Dabei verringert sich die Menge des chemisch gebundenen Siloxans auf der Epoxidharz-Oberfläche. Wird der Primeranteil weiter verringert, so ist die homogene und geschlossene Anbindung der Siloxane an die Epoxidharzoberfläche nicht mehr gewährleistet. Erhöht man den Primeranteil, so nimmt die Trennwirkung der trennwirksamen Komponente (i) gegenüber der Formwandung ab. Der Primeranteil, bzw. der Anteil an reaktivem Silan der Komponente (ii), liegt deshalb vorzugsweise zwischen 5 Promille und 5 Gew.-%, vorzugsweise zwischen 0.1 Gew.-% und 2 Gew.-%, bezogen auf das Gesamtgewicht des erfindungsgemässen Formtrennmittels.

Bei wasserhaltigen Formtrennmitteln ergibt sich beim Hinzufügen des Primers eine zumindest teilweise Hydrolyse der in der Komponente (ii) enthaltenen Methoxygruppen. Für lösungsmittelhaltige und im wesentlichen wasserfreie Formtrennmittel erfolgt die Hydrolyse der Methoxygruppen vorwiegend über die Luftfeuchtigkeit. Die Hydrolyse aller Methoxygruppen bzw. die gesamte Vernetzung erfolgt in der Regel nach dem Aufbringen auf die Oberfläche des Formteils durch die Luftfeuchtigkeit.

Ein Trennmittel auf der Basis einer Öl-in-Wasser-Emulsion erfordert in der Regel eine vorgeheizte Giessform für die Verarbeitung. Diese Forderung wird jedoch in den meisten Fällen in der Verarbeitung von Giessharzen erfüllt. Um die Emulgierbarkeit zu erhöhen, kann dem Formtrennmittel ein Tenside oder ein Gemisch von Tensiden zugesetzt werden. Der Anteil des Tensids ist vorzugsweise im Bereich von 0.002 Gew.-% bis 5 Gew.-%, vorzugsweise 0.05 Gew.-% bis 2 Gew.-%, bezogen auf das Gesamtgewicht des erfindungsgemässen Formtrennmittels.

Als duroplastisch härtbare Masse kann man erfindungsgemäss die an sich bekannten duroplastischen Formmassen verwenden. Duroplastische Kunststoffe sind aus der Literatur in grosser Zahl bekannt. Sie sind im Formkörper mindestens in dem Masse enthalten, dass diese duroplastischen Massen mit der reaktiven Silanverbindung [Komponente (ii)] wirksam chemisch zu reagieren vermögen. Duroplastische Formmassen sind beispielsweise Polykondensate und Polyaddukte. Polykondensate sind beispielsweise härtbare Phenol/-Formaldehyd Kunststoffe, härtbare Bisphenolharze, härtbare Harnstoff/Formaldehyd-Kunststoffe, Polyimide, Polybenzimidazole. Duroplastische Kunststoffe in Form von Polyaddukten sind beispielsweise Epoxidharze, Formmassen aus ungesättigten Polyesterharzen, DAP-Harze (Polydiallylphthalate), härtbare Melamin/Phenol/Formaldehyd-Formmassen, oder vernetzte Polyurethane. Bevorzugt sind diejenigen mit guten elektrischen Eigenschaften, vorzugsweise aromatische und cycloaliphatische Epoxidharze, sowie PUR-Giessmassen, insbesondere an sich bekannte in der Elektroindustrie verwendete gefüllte Epoxidharze und PUR-Harze. Als Füllstoffe kommen vorzugsweise Quarzmehl, Aluminiumoxid, Dolomite in verschiedenen an sich bekannten Mahlungen sowie solche mit silanisierten Oberflächen zum Einsatz.

Als Zusätze für duroplastische Massen in Form von Polykondensaten oder Polyaddukten können beispielsweise, neben dem Harz/Härter/Beschleuniger-System für Duroplaste, Trennmittel, Gleitmittel, Füllstoffe, Pigmente,

Haftvermittler, Stabilisatoren und Inhibitoren verwendet werden. Solche Verbindungen sind an sich bekannt.

Bei der Anwendung des Formtrennmittels wird dieses auf die aufgeheizte Formwandung mittels an sich bekannten Methoden aufgetragen. Solche Methoden sind beispielsweise Besprühen, Bepinseln, Auftrag mit Lappen und/oder Tauchen. Die Form kann aus verschiedenen Metallen, bevorzugt aus Stahl, Kupfer und Aluminium, aber auch aus silikatischen Gläsern, Keramiken, bestehen. Bevorzugt besteht die Form aus einem Material auf der Basis von Stahl, Aluminium oder aus polymeren Materialien, wie beispielsweise aus gefüllten Epoxidharzen. Als wichtiger Prozessparameter hat sich die Oberflächenrauheit der Giessformwandung herausgestellt. Die Oberflächen sollten eine möglichst geringe Rauheit aufweisen, wie sie bevorzugt beim Honen oder Läppen von Stahl auftritt. Die Temperatur der Formwandung kann zwischen 20°C und 180°C betragen. Vorzugsweise werden Temperaturen zwischen 60°C und 140°C eingestellt. Nach dem Auftrag des erfindungsgemässen Trennmittels verdunstet das Lösungsmittel und ein Trennmittelfilm bestehend aus der erfindungsgemässen Zusammensetzung bleibt auf der Oberfläche der Form zurück. Beim Verguss der Giessharzmasse mit bekannten Verfahren wie dem Vakuum-Verguss, dem Druckgelierverfahren oder dem freien Verguss, in die derart vorbereitete Form beginnt die exotherme Aushärtungsreaktion der duroplastischen Formmasse von der Formwandung aus, da die aufgeheizte Giessform die notwendige Aktivierungsenergie bereithält. Dabei wird gleichzeitig die reaktive Komponente (ii) über den oben definierten Rest R und gegebenenfalls auch über die Methoxysilangruppe chemisch in die Matrix des Epoxidharzes bzw. an deren Oberfläche eingebunden. Somit ist sichergestellt, dass die gesamte Oberfläche während der Härtungsreaktion hydrobophierend imprägniert wird. Dabei ist es möglich, dass auch Verbindungen der Formel (II) direkt oder indirekt an die Oberfläche des sich bildenden gehärteten Formteils chemisch gebunden werden. Die Giessform kann während der Aushärtungsreaktion extern beheizt oder auch gekühlt werden. Nach dem Gelierprozess können die Formteile der Form entnommen und in einem weiteren Schritt vollständig ausgehärtet werden. In diesem Sinn ist es auch möglich die Oberfläche eines entformten nicht vollständig ausgehärteten Formkörpers, der einer Nachhärtung unterzogen wird, vorgängig mit dem erfindungsgemässen Formtrennmittel zu behandeln, wobei im Formgebungsprozess ein beliebiges Formtrennmittel eingesetzt werden kann. Dabei werden im Nachhärtungsverfahren übliche an sich bekannte Temperaturen verwendet, welche mit den Formgebungstemperaturen vergleichbar sind.

Die mit oben beschriebenen Verfahren hergestellten Oberflächen zeigen hydrophobe Eigenschaften, wie sie für Silikone enthaltende Oberflächen bekannt sind. Sowohl die Hydrophobie als auch die Hydrophobiebeständigkeit ist deutlich verbessert. Eine Nydrophobiewiederkehr kann ebenfalls gemessen werden. Jedoch zeigt sich dabei, dass aufgrund der dünnen Schicht der Siloxane eine Wiederkehr wie bei einem massiven Silikon nicht gewährleistet ist. Ebenfalls ungeeignet erweisen sich die hydrophoben Eigenschaften, wenn die Oberfläche einem abrasiven Prozess ausgesetzt ist, bei dem zum Beispiel durch einen Sandsturm die Oberfläche abgeschliffen wird. Deshalb liegt der Einsatzbereich des erfindungsgemässen Trennmittels bzw. der erfindungsgemäss hergestellten Formteile vorwiegend im Schaltanlagenbau, wo erschwerte Innenraumbedingungen langfristig beherrscht werden müssen. Ebenfalls sinnvolle Einsatzgebiete ergeben sich für Isolierteile von Hochspannungsschaltern und Freiluftisolierungen im maritimen Klima oder Industrieverschmutzung. Erfindungswesentlich ist auch, dass durch die Modifizierung der Oberfläche alle mechanischen Eigenschaften und die nicht oberflächenabhängigen elektrischen Eigenschaften des Duroplasten, beispielsweise des Epoxidharzes unverändert erhalten bleiben. Die folgenden Beispiele erläutern die Erfindung.

## Beispiel 1

100 ml einer wässrigen Emulsion aus Silanen mit wenig Siloxanen (zum Beispiel das Formtrennmittel Aquathan 27/077 der Firma Block Chemie KG, Mölln, Deutschland) werden unter Rühren 1-10 ml 3-Glycidyloxypropyltrimethoxysilan zugesetzt und während 5 Minuten unter ständigem Rühren homogenisiert. Das entstehende Formtrennmittel wird innert 24 Stunden verarbeitet.

## Beispiel 2

1 ml, 3 ml, 5 ml, 7 ml, und 10 ml 3-Glycidyloxypropyltrimethoxysilan werden jeweils mit 30 ml dest. Wasser in einem Turborührer gelöst. Anschliessend wird diese Lösung wie in Beispiel 1 beschrieben in 100 ml Aquathan 27/077 eingerührt. Das entstehende Formtrennmittel wird innert 24 Stunden verarbeitet.

## Beispiel 3

1ml, 3 ml, 5 ml, 7 ml, und 10 ml 3-Glycidyloxypropyltrimethoxysilan werden jeweils mit 30 ml Isopropanol in einem Rührer gemischt und anschliessend in 100 ml Aquathan 27/077 eingerührt. Das entstehende Formtrennmittel wird innert 24 Stunden verarbeitet.

Beispiel 4

Zu 1ml, 2 ml, 4 ml, 5.5 ml, und 7,5 ml 3-Glycidyloxypropyltrimethoxysilan werden jeweils tropfenweise 100 ml einer wässrigen Emulsion aus kurzkettigen Siloxanen und Silanen, (zum Beispiel das Formtrennmittel Aquathan 10/050 der Firma Block Chemie KG, Mölln, Deutschland) in einem Rührwerk zugesetzt und mindestens 5 Minuten verrührt. Das Gemisch wird innerhalb von 12 Stunden verarbeitet.

Beispiel 5

Es wird analog zu Beispiel 4 verfahren. Der Primer wird jedoch mit einem Turborührer in destilliertes Wasser voremulgiert.

Beispiel 6

Es wird analog zu Beispiel 4 verfahren. Der Primer wird jedoch mit einem Rührer in Isopropanol gelöst.

Beispiel 7

100 ml eines Lösungsmittel freien trennwirksamen Gemisches aus Siloxanen und Silanen (zum Beispiel das Formtrennmittel Konzentrat 365 der Firma Block Chemie KG, Mölln, Deutschland) werden jeweils 1 ml, 2 ml und 3 ml 3-Glycidyloxypropyltrimethoxysilan uner Rühren zugesetzt. Das entstehende Gemisch kann bei Auschluss jeglicher Feuchtigkeit bis zu einem halben Jahr gelagert werden.

Beispiel 8

Es wird analog zu Beispiel 7 verfahren. Der Primer wird jedoch in einem Turborührer in destilliertes Wasser voremulgiert.

Beispiel 9

Es wird analog zu Beispiel 7 verfahren. Der Primer wird jedoch mit einem Rührer in Isopropanol gelöst.

Beispiel 10 (Herstellung eines Formkörpers im konventionellem Vakuum-Giessverfahren)

a) Herstellung des Epoxidharzgemisches: 100 Teile des aromatischen Epoxidharzes CY 205 (der Ciba SC Ltd) werden mit 300 Teilen des silanisierten Quarzmehls vom Typ W12EST (der Quarzwerke Frechen, BRD) in einem Dissolver gemischt, in einem Druckgefäss evakuiert und dann auf eine Temperatur im Bereich von 80°C bis 130°C erwärmt. Diesem Voransatz werden in einem statischen Rührwerk 95 Teile des durch Aufschmelzen flüssig gewordenen Härters HT 907 (der Ciba SC Ltd) und ein Teil des Beschleunigers DY 63 (der Ciba SC Ltd) hinzugefügt.

b) Bearbeitung der Giessform: Die Giessform ist aus Edelstahl mit gehonter Oberfläche mit einer Oberflächengüte von $Ra<0,1\ \mu m$ beziehungsweise von $Rz<1\ \mu m$. Sie wird auf mindestens 80°C und maximal auf 120°C vorgeheizt. Ein Formtrennmittel jeweils gemäss eines der Beispiele 1 bis 9 wird auf alle Abgussflächen mit Hilfe einer Sprühpistole aufgetragen. Nach dem Verdunsten des Wassers oder des Lösungsmittels wird das zurückbleibende Trennmittel gleichmässig verteilt.

c) Vergiessen des Epoxidharzes: Das in Absatz a) hergestellte Giessharzgemisch wird auf mindestens 80°C und höchstens auf 140°C erwärmt und in einem Vakuumbehälter unter Vakuum in die gemäss Absatz b) präparierte Giessform vergossen. Nach Abschluss der Härtungsreaktion wird die Giessform aus dem Vakuumbehälter entnommen und der Formkörper, welcher die Form eines Prüfkörpers aufweist, entformt. Zur vollständigen Vernetzung wird der Prüfkörper während 24 Stunden bei 140°C in einem Wärmeschrank gelagert. Prüfresultate der derart erhaltenen Prüfkörper sind in den Tabellen 1 und 2 zusammen gestellt.

Beispiel 11

Beispiel 10 wird wiederholt, jedoch wird ein Epoxidharzgemisch verwendet, bestehend aus 100 Teilen des

Harzes CY184 (Ciba SC Ltd), 90 Teilen des Härters HT907 (Ciba SC Ltd), 1 Teil des Beschleunigers DY63 (Ciba SC Ltd) und 300 Teilen des Füllstoffs W12EST (Quarzwerke Frechen, BRD).

Beispiel 12

Es werden Prüfkörper nach Beispiel 10 oder 11 hergestellt, in einer Art und Weise, dass das Formstoffgemisch geringfügig weniger Härter enthält, als zur vollständigen Aushärtung des Harzes notwendig ist, sowie unter Verwendung eines beliebigen Formtrennmittels. Nach der Entformung werden die Prüfkörper mit Isopropanol gereinigt und in einem Wärmeschrank auf 90 bis 110 °C erwärmt. Das erfindungsgemässe Formtrennmittel wird anschliessend mit Hilfe einer Sprühpistole auf die Oberflächen der Prüfkörper aufgebracht. Bei Bedarf kann mit einem Lappen das Formtrennmittel gleichmässig verteilt werden. Die so behandelten Prüfkörper werden in einem Wärmeschrank auf 140°C erwärmt. Diese Temperatur wird mindestens 30 Minuten aufrecht erhalten. Der gesamte Vorgang ab Erwärmen der Prüfkörper wird ein zweites Mal wiederholt. Mit dem Erwärmen der Prüfkörper auf 140°C werden unvernetzte Bestandteile thermisch aktiviert.
Während dieser Nachvernetzung reagiert das unvernetzte Harz mit dem erfindungsgemässen Formtrennmittel und bildet eine hydrophobe Oberfläche, deren Eigenschaften sich nicht wesentlich von den Prüfkörpern unterscheidet, deren Oberflächen während der Formgebung hydrophobiert wurden.

Beispiel 13 (Vergleichsbeispiel)

Die Abgussflächen der in Beispiel 10 benutzten Giessform werden sorgfältig mit Isopropanol gereinigt. Die Abgussflächen werden dann analog zu Beispiel 10, Absatz b) präpariert, jedoch wird das Formtrennmittel Aquathan 27/077 der Firma Block Chemie KG, BRD, welches eine wässrige Emulsion von Polydimethylsiloxanen (Anteil an trennwirksamen Bestandteilen: 11.5%) darstellt, verwendet. Im weiteren wird analog zu den Beispielen 10 und 11 unter Verwendung des dort beschriebenen Epoxidharzgemischen verfahren.

Beispiel 14 (Vergleichsbeispiel)

Die Abgussflächen der Giessform mit gleichen geometrischen Abmassen wie in Beispiel 10, werden sorgfältig mit Isopropanol gereinigt. Die Gießform darf während ihrer gesamten Nutzung niemals mit silikonhaltigen Stoffen, wie Formtrennmittel, Einbrennöle versehen worden sein. Die Abgussflächen werden dann analog zu Beispiel 10, Absatz b) präpariert, jedoch wird das Formtrennmittel Aquathan 96/329 der Firma Block Chemie KG, BRD, welches eine wässrige Emulsion von synthetischen Ölen (Anteil an trennwirksamen Bestandteilen: 15%) darstellt, verwendet. Im weiteren wird analog zu den Beispielen 10 und 11 unter Verwendung des dort beschriebenen Epoxidharzgemischen verfahren. Nach dem Abguss werden die Reste des anhaftenden Formtrennmittels mit Isopropanol entfernt. Somit wird eine technisch saubere Epoxidharzoberfläche erreicht.

Prüfung der Hydrophobiebeständigkeit

Die Prüfung der Hydrophobiebeständigkeit erfolgte mit dem Verfahren des Modified Rotating-Wheel-Dip-Tests (MRWDT). Um die Wiederkehr der Hydrophobie nach deren Verlust zu bewerten, wurde eine zyklische Prüfung in einer Salznebelkammer durchgeführt. Diese Prüfmethoden sind ausführlich in den folgenden Literaturstellen (Referenzen 1 und 2) beschrieben:

[Referenz 1] Kaltenborn et. al: "On the Electrical Performance of Different Insulating Materials in a Rotating-Wheel-Dip-Test"; 1997 CEIPD, pp.398-401, Minneapolis, 1997.
[Referenz 2] H. Zhang, R. Hackam: "Surface Resistance and Hydrophobicity of HTV Silicone Rubber in the Presence of Salt-fog"; 1998 CEIDP, Atlanta 1998.

Im MRWDT sind die Prüfbedingungen wie folgt:

Prüfbedingungen 1:

- Elektrolytleitfähikeit: 0.5 κ [mS/cm]
- elektrisches Feld: 0.6[kV/cm]

Prüfbedingungen 2:

- Elektrolytleitfähikeit: 1.5 κ [mS/cm]
- elektrisches Feld: 0.6[kV/cm]

Prüfresultate

Die mittleren Ausfallszeiten der verschiedenen in den Beispielen gezeigten Materialien sind in Tabelle 1 gegeben. Tabelle 1 zeigt die Resultate gemäss Prüfbedingungen 1. Tabelle 2 zeigt die Resultate gemäss Prüfbedingungen 2.

Tabelle 1

| (Prüfbedingungen 1) | | | | | |
|---|---|---|---|---|---|
| | Beispiel 1 | Beispiel 4 | Beispiel 6 | Beispiel 12 (Vergleich) | Beispiel 13 (Vergleich) |
| Ausfalls-Zeiten (h) | 576* | 292 | 427 | 196 | <1 |

*Abbruch der Messung, kein Ausfall

Aus Tabelle 1 ist ersichtlich, dass die erfindungsgemäss hergestellten Formkörper deutlich bessere Resultate ergeben im Vergleich zu den konventionell hergestellten.

Beispiel 15

Vergleicht man bei einer höheren Beanspruchung (Prüfbedingungen 2) die erfindungsgemäss hergestellten Formkörper zusätzlich mit Hydrophobie optimierten Silikonen, so kann auch hier eine deutlich bessere Hydrophobiebeständigkeit für die erfindungsgemäss hergestellten Formkörper nachgewiesen werden. Resultate des Beispiels 1, im Vergleich mit den Beispielen 13 und 14, sowie mit Silikonen aus Referenz 1 sind in Tabelle 2 zusammen gestellt.

Tabelle 2

| (Prüfbedingungen 2) | | | | | |
|---|---|---|---|---|---|
| | Beispiel 1 | Beispiel a) aus Ref.1 | Beispiel b) aus Ref.1 | Beispiel 12 (Vergleich) | Beispiel 13 (Vergleich) |
| Ausfalls-Zeiten (h) | 282 | 269 | 176 | 168 | <1 |

Aus Tabelle 2 ist ersichtlich, dass die erfindungsgemäss hergestellten Formkörper deutlich bessere Resultate ergeben im Vergleich zu den konventionell hergestellten. Vergleichbare Resultate zu Beispiel 1 erhält man auch für die Beispiele 2 bis 9.

Hydrophobie-Wiederkehr

Ein wesentlicher Vorteil der erfindungsgemässen Formtrennmittel als Beschichtungswerkstoff für elektrische Isolationen ist die Fähigkeit, dass die Isolationsschicht nach Verlust der Hydrophobie sich selbständig regeneriert. Um diesen Effekt zu bewerten wurden verschiedene Referenzmaterialien mit den erfindungsgemässen Materialien nach der zyklischen Alterung in einer Salznebelkammer verglichen. Der Zyklus beinhaltete eine 24-stündige Alterungsphase und eine 24-stündige Erholungsphase. Während der Alterung wurden folgende Parameter eingestellt:

| | |
|---|---|
| Elektrisches Feld E | 0,6 kV/cm (a.c., 60 Hz) |
| Elektrolytleitfähigkeit κ | 0,5 mS/cm |
| Sprühdruck P | 0,54±0,02 MPa |
| Durchflussrate | 1.6±0.2 ℓ/min |
| Prüftemperatur T | 23±2 °C |

Die Prüfkörper von 100 mm Länge und einem Durchmesser von 30 mm wurden an den Enden mit Graphitscheiben mit einem Durchmesser von 35 mm als Elektroden verklebt. Der Randwinkel r als Messgrösse der Hydrophobie wurde am Beginn jeder Periode gemessen. Die Resultate sind aus einer beigefügten Figur ersichtlich. In dieser Figur ist der Vergleich der Hydrophobiewiederkehr für verschiedene Materialien in einer Salznebelkammer dargestellt.

Hierbei bedeuten:

| | |
|---|---|
| M1 = Beispiel 1 | REF1 = Beispiel 11 |
| M3 = Beispiel 7 | SIR4 = Silikonharz aus Ref. 2 |

Es ist festzustellen, dass im Vergleich zu einem Standard-Epoxidharz (REF1) die erfindungsgemässen Materialien eine deutlich stärkere Wiederkehr der Hydrophobie aufweisen. Im Vergleich zu einem Silikon-Material ist jedoch festzustellen, dass weder dessen geringer Abfall der Hydrophobie nach der Alterungsphase, wie auch die Erholung um Werte des Ausgangszustandes nicht erreicht werden. Die Ursache dafür ist in der geringen Schichtdicke des oberflächenwirksammen Silikons auf den erfindungsgemässen Materialien zu finden.

## Patentansprüche

1. Formtrennmittel für die Herstellung von duroplastischen Formteilen mit hydrophobierter Oberfläche, **dadurch gekennzeichnet, dass** dieses enthält:

   (i) mindestens ein entformend wirkendes Polydimethylsiloxan der allgemeinen Formel (I),

   $$(CH_3)_3Si\text{-}O\text{-}[Si(CH_3)_2\text{-}O]_m\text{-}Si(CH_3)_3 \qquad (I),$$

   worin

   m Null oder eine ganze Zahl von 1 bis 1000, bedeutet, sowie

   (ii) mindestens eine reaktive, gegebenenfalls hydrolysierbare, Silanverbindung, welche mit der im Formgebungsverfahren sich bildenden duroplastischen Oberfläche *in situ* chemisch zu reagieren vermag, der allgemeinen Formel (III):

   $$(CH_3O)_{3-p}(CH_3)_pSi\text{-}[O\text{-}Si(CH_3)_2]_s\text{-}R \qquad (III),$$

   worin

   p Null, 1, 2 oder 3,
   s Null oder eine ganze Zahl von 1 bis 100,
   R einen zweiwertigen substituierten organischen Rest, welcher eine reaktive Gruppe trägt, welche mit einem Epoxidharz chemisch zu reagieren vermag bedeuten und diese reaktive Gruppe Hydroxy, Amino, die Isocyanatgruppe, eine Estergruppe, oder Glycidyl, bedeutet, und der Anteil an reaktivem Silan der Komponente (ii) im Bereich zwischen 5 Gew.-Promille und 5 Gew.-%, bezogen auf das Gesamtgewicht des Formtrennmittels, liegt.

2. Formtrennmittel nach Anspruch 1, **dadurch gekennzeichnet, dass** der Anteil an reaktivem Silan der Komponente (ii) zwischen 0.1 Gew.-% und 2 Gew.-%, bezogen auf das Gesamtgewicht des Formtrennmittels, liegt.

3. Formtrennmittel nach Anspruch 1 oder 2, **dadurch gekennzeichnet, dass** dieses (iii) gegebenenfalls weitere Zusatzstoffe, vorzugsweise wässerige und/oder nicht-wässerige Lösungsmittel, enthält.

4. Formtrennmittel nach einem der Ansprüche 1 bis 3, **dadurch gekennzeichnet, dass** dieses als entformend wirkende Verbindung zusätzlich mindestens ein Silan der allgemeinen Formel (II):

   $$(CH_3)_3Si\text{-}O\text{-}[Si(CH_3)_2\text{-}O]_m\text{-}[SiH(CH_3)\text{-}O]_n\text{-}Si(CH_3)_3 \qquad (II),$$

   enthält, worin

m die Bedeutung nach Anspruch 1 hat, und

n eine ganze Zahl von 1 bis 50, vorzugsweise eine ganze Zahl von 1 bis 10, bedeutet, und die Dimethylsilyloxygruppen und die Methylhydrosilyloxygruppen im Molekül in beliebiger Reihenfolge angeordnet sind, wobei die Verbindung, bzw. die Verbindungen, der Formel (II) in Konzentrationen von 0.1 Gew.-% bis 50.0 Gew.-%, vorzugsweise von 1,5 Gew.-% bis 5.0 Gew.-%, bezogen auf das Gewicht der anwesenden Verbindungen der Formel (I), anwesend ist bzw. sind.

**5.** Formtrennmittel nach einem der Ansprüche 1 bis 4, **dadurch gekennzeichnet, dass** in der Verbindung der Formel (I): m eine ganze Zahl von 10 bis 50 bedeutet.

**6.** Formtrennmittel nach einem der Ansprüche 1 bis 5, **dadurch gekennzeichnet, dass** und in der Verbindung der allgemeinen Formel (III): p = Null oder 1, und s Null oder 1 bis 10, bedeuten.

**7.** Formtrennmittel nach Anspruch 6, **dadurch gekennzeichnet, dass** in der Verbindung der Formel (III) der Substituent R eine Acetylestergruppe oder einen 3-Glycidoxypropylrest bedeutet.

**8.** Formtrennmittel nach einem der Ansprüche 1 bis 7, **dadurch gekennzeichnet, dass** dieses als reaktive Silanverbindung 3-Glycidoxypropyl-trimethoxysilan und/oder 3-Glycidoxypropyl(methyl)dimethoxysilan enthält.

**9.** Formtrennmittel nach einem der Ansprüche 1 bis 6, **dadurch gekennzeichnet, dass** dieses als reaktive Silanverbindung m-Aminophenyltrimethoxysilane, p-Aminophenyltrimethoxysilane,3-(m-Aminophenoxy)propyltrimethoxysilane, und/oder {3-(2-Aminoethyl)aminopropyl}trimethoxysilane, enthält.

**10.** Formtrennmittel nach einem der Ansprüche 1 bis 6, **dadurch gekennzeichnet, dass** dieses als reaktive Silanverbindung Acetoxymethyltrimethoxysilan, Acetoxypropyltrimethoxysilan, Hydroxymethyltriethoxysilan, Hydroxymethyltrimethylsilan oder Isocyanatopropyltriethoxysilan enthält.

**11.** Formtrennmittel nach einem der Ansprüche 1 bis 6, **dadurch gekennzeichnet, dass** dieses als reaktive Verbindung der Komponente (ii) eine Verbindungen der allgemeinen Formel (VI):

$$(CH_3O)_{3-p}(CH_3)_pSi\text{-}[O\text{-}Si(CH_3)_2]_s\text{-}[O\text{-}Si(CH_3)(R_1)]_x\text{-}O\text{-}Si(CH_3)_p(OCH_3)_{3-p} \quad \text{(VI)},$$

worin

r eine ganze Zahl von 1 bis 5, vorzugsweise 1, 2 oder 3, bedeutet,

$R_1$ unabhängig voneinander eine der Bedeutungen von R gemäss Anspruch 1, und

s die Bedeutung gemäss Anspruch 1,

haben, wobei die Reste $-O-Si(CH_3)_2-$ und $-O-Si(CH_3)(R_1)-$ im Molekül in beliebiger Reihenfolge angeordnet sind.

**12.** Formtrennmittel nach einem der Ansprüche 1 bis 11, **dadurch gekennzeichnet, dass** dieses eine Öl-in-Wasser-Emulsion darstellt.

**13.** Verwendung eines Formtrennmittels nach einem der Ansprüche 1 bis 12 für die Herstellung von duroplastischen Formteilen mit hydrophobierter Oberfläche.

**14.** Verwendung nach Anspruch 13 für die Herstellung von Formteilen aus duroplastischen Formmassen, vorzugsweise aus Polykondensaten und Polyaddukten, welche gegebenenfalls übliche an sich bekannte Zusatzstoffe enthalten.

**15.** Verwendung nach Anspruch 14, **dadurch gekennzeichnet, dass** die duroplastischen Formmassen, härtbare Phenol/Formaldehyd Kunststoffe, härtbare Bisphenolharze, härtbare Harnstoff/Formaldehyd-Kunststoffe, Polyimide, Polybenzimidazole, Epoxidharze, ungesättigten Polyesterharzen, DAP-Harze, härtbare Melamin/Phenol/-Formaldehyd-Formmassen, und/oder vernetzte Polyurethane darstellen, vorzugsweise aromatische und/oder cycloaliphatische Epoxidharze, sowie PUR-Giessmassen.

**16.** Verwendung nach einem der Ansprüche 13 bis 15, **dadurch gekennzeichnet**, für die Herstellung von Formkörpern aus an sich bekannten in der Elektroindustrie verwendeten gefüllten Epoxidharzen und PUR-Harzen.

**17.** Verfahren zur Herstellung von duroplastischen Formteilen mit hydrophobierter Oberfläche, **dadurch gekennzeichnet, dass** man im Formgebungsverfahren ein Formtrennmittel gemäss einem der Ansprüche 1 bis 12 verwendet.

**18.** Die nach Anspruch 17 hergestellten Formteile.

## Claims

**1.** Mould-release agent for the production of thermoset mouldings with a hydrophobicized surface, **characterized in that** this comprises:

(i) at least one polydimethylsiloxane with mould-release action of the general formula (I)

$$(CH_3)_3Si\text{-}O\text{-}[Si(CH_3)_2\text{-}O]_m\text{-}Si(CH_3)_3 \qquad (I)$$

where

m is zero or an integer from 1 to 1 000, and also

(ii) at least one reactive, where appropriate hydrolysable, silane compound which is capable of reacting chemically in situ with the thermoset surface formed in the moulding process, of the general formula (III):

$$(CH_3O)_{3\text{-}p}(CH_3)_pSi\text{-}[O\text{-}Si(CH_3)_2]_s\text{-}R \qquad (III)$$

where

p is zero, 1, 2 or 3,
s is zero or an integer from 1 to 100,
R is a divalent substituted organic radical which bears a reactive group which can react chemically with an epoxy resin, this reactive group being hydroxy, amino, the isocyanate group, an ester group, or glycidyl, and the proportion of reactive silane of component (ii) is in the range from 5 parts per thousand by weight to 5% by weight, based on the total weight of the mould-release agent.

**2.** Mould-release agent according to Claim 1, **characterized in that** the proportion of reactive silane of component (ii) is from 0.1% by weight to 2% by weight, based on the total weight of the mould-release agent.

**3.** Mould-release agent according to Claim 1 or 2, **characterized in that** this comprises (iii) other additives where appropriate, preferably aqueous and/or non-aqueous solvents.

**4.** Mould-release agent according to any of Claims 1 to 3, **characterized in that** this also comprises, as compound with mould-release action, at least one silane of the general formula (II):

$$(CH_3)_3Si\text{-}O\text{-}[Si(CH_3)_2\text{-}O]_m\text{-}[SiH(CH_3)\text{-}O]_n\text{-}Si(CH_3)_3 \text{ (II),} \qquad (II),$$

where

m is as defined in Claim 1, and
n is an integer from 1 to 50, preferably an integer from 1 to 10, and the dimethylsilyoxy groups and the methylhydrosilyloxy groups in the molecule have been arranged in any desired sequence, and where the compound(s) of formula (II) is/are present in concentrations of from 0.1% by weight to 50.0% by weight, preferably from 1.5% by weight to 5.0% by weight, based on the weight of the compounds present of the formula (I).

**5.** Mould-release agent according to any of Claims 1 to 4, **characterized in that**, in the compound of formula (I): m is an integer from 10 to 50.

**6.** Mould-release agent according to any of Claims 1 to 5, **characterized in that** and in the compound of the general formula (III): p = zero or 1, and s is zero or from 1 to 10.

**7.** Mould-release agent according to Claim 6, **characterized in that**, in the compound of the formula (III), the substituent R is an acetyl ester group or a 3-glycidoxypropyl radical.

**8.** Mould-release agent according to any of Claims 1 to 7, **characterized in that** this comprises, as reactive silane compound 3-glycidoxypropyltrimethoxysilane and/or 3-glycidoxypropylmethyldimethoxysilane.

**9.** Mould-release agent according to any of Claims 1 to 6, **characterized in that** this comprises, as reactive silane compound, m-aminophenyltrimethoxysilanes, p-aminophenyltrimethoxysilanes, 3-(m-aminophenoxy)-propyltrimethoxysilanes, and/or {3-(2-aminoethyl)aminopropyl}trimethoxysilanes.

**10.** Mould-release agent according to any of Claims 1 to 6, **characterized in that** this comprises, as reactive silane compound, acetoxymethyltrimethoxysilane, acetoxypropyltrimethoxysilane, hydroxymethyltriethoxysilane, hydroxymethyltrimethylsilane, or isocyanatopropyltriethoxysilane.

**11.** Mould-release agent according to any of Claims 1 to 6, **characterized in that** this comprises, as reactive compound of component (ii), a compound of the general formula (VI):

$$(CH_3O)_{3-p}(CH_3)_pSi\text{-}[O\text{-}Si(CH_3)_2]_s\text{-}[O\text{-}Si(CH_3)(R_1)]_r\text{-}O\text{-}Si(CH_3)_p(OCH_3)_{3-p} \quad \text{(VI)}$$

where

- r is an integer from 1 to 5, preferably 1, 2, or 3,
- $R_1$, independently of one another, are as defined for R according to Claim 1, and
- s is as defined in Claim 1,

where the radicals $-O-Si(CH_3)_2-$ and $-O-Si(CH_3)(R_1)$ in the molecule have been arranged in any desired sequence.

**12.** Mould-release agent according to any of Claims 1 to 11, **characterized in that** this is an oil-in-water emulsion.

**13.** Use of a mould-release agent according to any of Claims 1 to 12 for producing thermoset mouldings with a hydrophobicized surface.

**14.** Use according to Claim 13 for producing mouldings from thermoset moulding compositions, preferably from polycondensates or polyadducts, which, where appropriate, comprise conventional additives known per se.

**15.** Use according to Claim 14, **characterized in that** the thermoset moulding compositions are curable phenolformaldehyde plastics, curable bisphenol resins, curable urea-formaldehyde plastics, polyimides, polybenzimidazoles, epoxy resins, unsaturated polyester resins, DAP resins, curable melamine-phenol-formaldehyde moulding compositions, and/or crosslinked polyurethanes, preferably aromatic and/or cycloaliphatic epoxy resins, or else, PU moulding compositions.

**16.** Use according to any of Claims 13 to 15, **characterized in that** for the production of mouldings using, as is known in the electrical industry, filled epoxy resins or PU resins.

**17.** Process for producing thermoset mouldings with a hydrophobicized surface, **characterized in that** a mould-release agent according to any of Claims 1 to 12 is used in the moulding process.

**18.** Mouldings produced according to Claim 17.

## Revendications

1. Agent de démoulage pour la production de pièces moulées thermoplastiques présentant une surface rendue hydrophobe, **caractérisé en ce que** celui-ci contient :

   (i) au moins un polydiméthylsiloxane ayant un effet démoulant de formule générale (I),

   $$(CH_3)_3Si\text{-}O\text{-}[Si(CH_3)_2\text{-}O]_m\text{-}Si(CH_3)_3 \quad (I),$$

   dans laquelle
   m signifie zéro ou un nombre entier de 1 à 1000, ainsi que
   (ii) au moins un composé silane réactif, le cas échéant hydrolysable, qui peut réagir chimiquement in situ avec la surface thermoplastique qui se forme pendant le procédé de moulage, de formule générale (III) :

   $$(CH_3O)_{3-p}(CH_3)_pSi\text{-}[O\text{-}Si(CH_3)_2]_s\text{-}R \quad (III),$$

   dans laquelle
   p signifie zéro 1, 2 ou 3,
   s signifie zéro ou un nombre entier de 1 à 100,
   R signifie un radical organique substitué divalent, qui porte un groupe réactif qui peut réagir chimiquement avec une résine époxyde et ce groupe réactif signifiant un groupe hydroxy, amino, le groupe isocyanate, un groupe ester ou glycidyle et la proportion de silane réactif du composant (II) se situant dans la plage entre 5 pour mille en poids et 5% en poids, par rapport au poids total de l'agent de démoulage.

2. Agent de démoulage selon la revendication 1, **caractérisé en ce que** la proportion de silane réactif du composant (II) se situe entre 0,1% en poids et 2% en poids par rapport au poids total de l'agent de démoulage.

3. Agent de démoulage selon la revendication 1 ou 2, **caractérisé en ce qu'**il contient (iii) le cas échéant d'autres additifs, de préférence des solvants aqueux et/ou non aqueux.

4. Agent de démoulage selon l'une quelconque des revendications 1 à 3, **caractérisé en ce que** celui-ci contient comme composé à effet démoulant, en plus, au moins un silane de formule générale (II) :

   $$(CH_3)_3Si\text{-}O\text{-}[Si(CH_3)_2\text{-}O]_m\text{-}[SiH(CH_3)\text{-}O]_n\text{-}Si(CH_3)_3 \ , \quad (II),$$

   dans laquelle
   m a la signification selon la revendication 1 et
   n signifie un nombre entier de 1 à 50, de préférence un nombre entier de 1 à 10 et les groupes diméthylsilyle et méthylhydrosilyle dans la molécule sont disposés dans un ordre quelconque dans la molécule, le composé ou les composés de formule (II) étant présents en des concentrations de 0,1% en poids à 50,0% en poids, de préférence de 1,5% en poids à 5,0% en poids par rapport au poids des composés présents de formule (I).

5. Agent de démoulage selon l'une quelconque des revendications 1 à 4, **caractérisé en ce que** dans le composé de formule (I), m signifie un nombre entier de 10 à 50.

6. Agent de démoulage selon l'une quelconque des revendications 1 à 5, **caractérisé en ce que** dans le composé de formule générale (III), p signifie zéro ou 1 et s signifie zéro ou 1 à 10.

7. Agent de démoulage selon la revendication 6, **caractérisé en ce que** dans le composé de formule (III), le substituant R signifie un groupe ester d'acétyle ou un radical 3-glycidoxypropyle.

8. Agent de démoulage selon l'une quelconque des revendications 1 à 7, **caractérisé en ce que** celui-ci contient comme composé silane réactif le 3-glycidoxypropyltriméthoxysilane et/ou le 3-glycidoxypropyl(méthyl)diméthoxysilane.

9. Agent de démoulage selon l'une quelconque des revendications 1 à 6, **caractérisé en ce que** celui-ci contient comme composé silane réactif des m-aminophényltriméthoxysilanes, des p-aminophényltriméthoxysilanes, des 3-(m-aminophénoxy)propyltriméthoxysilanes et/ou des (3-(2-aminoéthyl)aminopropyl)-triméthoxysilanes.

10. Agent de démoulage selon l'une quelconque des revendications 1 à 6, **caractérisé en ce que** celui-ci contient comme composé silane réactif l'acétoxyméthyltriméthoxysilane, l'acétoxypropyltriméthoxysilane, l'hydroxyméthyltriéthoxysilane, l'hydroxyméthyltriméthylsilane ou l'isocyanatopropyltriéthoxysilane.

11. Agent de démoulage selon l'une quelconque des revendications 1 à 6, **caractérisé en ce que** celui-ci contient comme composé réactif du composant (ii) un composé de formule générale (VI) :

$$(CH_3O)_{3-p}(CH_3)_pSi\text{-}[O\text{-}Si(CH_3)_2]_s\text{-}[O\text{-}Si(CH_3)(R_1)]_r\text{-}O\text{-}Si(CH_3)_p(OCH_3)_{3-p} \quad (VI),$$

dans laquelle
r signifie un nombre entier de 1 à 5, de préférence 1, 2 ou 3,
$R_1$, indépendamment l'un de l'autre, a une des significations de R selon la revendication 1 et
s a la signification selon la revendication 1 ;
les radicaux $-O-Si(CH_3)_2-$ et $-O-Si(CH_3)(R_1)-$ étant disposés dans la molécule dans un ordre quelconque.

12. Agent de démoulage selon l'une quelconque des revendications 1 à 11, **caractérisé en ce que** celui-ci est une émulsion huile dans eau.

13. Utilisation d'un agent de démoulage selon l'une quelconque des revendications 1 à 12 pour la production de pièces moulées thermoplastiques avec une surface rendue hydrophobe.

14. Utilisation selon la revendication 13 pour la préparation de pièces moulées en masses de moulage thermoplastiques, de préférence constituées de produits de polycondensation et de polyaddition, qui contiennent le cas échéant des additifs usuels, connus en soi.

15. Utilisation selon la revendication 14, **caractérisée en ce que** les masses de moulage thermoplastiques sont des matériaux synthétiques durcissables de phénol/formaldéhyde, des résines bisphénol durcissables, des matériaux synthétiques durcissables d'urée/formaldéhyde, des polyimides, des polybenzimidazoles, des résines époxyde, des résines polyester insaturé, des résines DAP, des masses de moulage durcissables de mélamine/phénol/formaldéhyde et/ou des polyuréthannes réticulés, de préférence des résines époxyde aromatiques et/ou cycloaliphatiques ainsi que des masses de moulage en PUR.

16. Utilisation selon l'une quelconque des revendications 13 à 15 pour la préparation de corps moulés en résines époxyde et résines PUR chargées connues en soi, utilisées dans l'industrie électrique.

17. Procédé pour la préparation de pièces moulées thermoplastiques avec une surface rendue hydrophobe, **caractérisé en ce qu'**on utilise dans le procédé de moulage un agent de démoulage selon l'une quelconque des revendications 1 à 12.

18. Pièces moulées préparées selon la revendication 17.

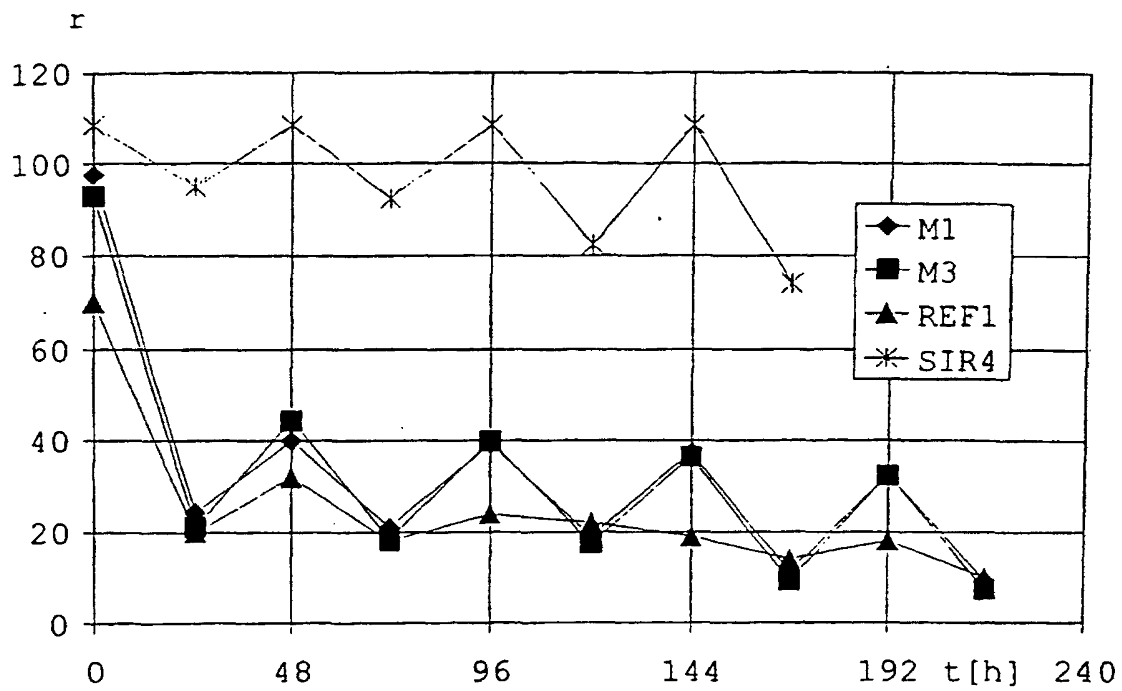


Figur